# EUROPÄISCHE PATENTSCHRIFT

(11) **EP 1 194 702 B1**
(45) Veröffentlichungstag und Bekanntmachung des Hinweises auf die Patenterteilung: **09.03.2005**
(21) Anmeldenummer: 01947150.7
(22) Anmeldetag: 14.05.2001
(51) Int. Cl.: F16C 11/06

(54) **KUGELHÜLSENGELENK**
SPHERICAL SLEEVE JOINT
ARTICULATION A DOUILLE A BILLES

(30) Priorität: 15.05.2000 DE 10023602
(43) Veröffentlichungstag der Anmeldung: 10.04.2002
(73) Patentinhaber: ZF Lemförder Metallwaren AG, 49441 Lemförde (DE)
(72) Erfinder: BOHNE, Manfred, 49448 Quernheim (DE); LAMPE, Klaus, 49448 Stemshorn (DE); HUSMANN, Stefan, 49448 Ströhen (DE); WEHRI, Franz-Josef, 49401 Damme (DE); KLUMPE, Stefan, 49179 Ostercappeln (DE)
(86) Internationale Anmeldenummer: PCT/DE2001/001818
(87) Internationale Veröffentlichungsnummer: WO 2001/088394

(56) Entgegenhaltungen:
- DE-A- 3 341 878
- DE-A- 3 425 334
- GB-A- 2 196 690
- US-A- 3 801 169
- US-A- 4 678 350
- US-A- 5 364 191

## Beschreibung

Die Erfindung betrifft ein Kugelhülsengelenk mit einem Gelenkgehäuse, einer mit einer kugelförmig ausgebildeten Lagerfläche versehenen Kugelhülse und einer die Lagerfläche umschließenden in einer Ausnehmung des Gelenkgehäuses aufgenommenen Lagerschale.

Kugelhülsengelenke der eingangs geschilderten Art sind prinzipiell im Stand der Technik bekannt und werden in unterschiedlicher Ausgestaltung in allen Bereichen der Technik, insbesondere auch in der Automobilindustrie eingesetzt. Bei derartigen Gelenken wird das Gehäuse üblicherweise aus einem einteiligen Rohr - vorzugsweise aus Stahl - hergestellt, in welches im Rahmen der Fertigung die übrigen Bauteile des Kugelhülsengelenkes eingepasst werden. Die Fertigungsschritte sehen hierbei die Einpassung eines ersten Verschlussringes in das Gehäuse vor, anschließend wird die bereits mit der die Kugelhülse umschließenden Lagerschale versehene Baueinheit in das Gehäuse eingesetzt und abschließend mittels eines zweiten Verschlussringes im Gehäuse fixiert, wobei beide Verschlussringe gleichzeitig eine gewisse Dichtfunktion gegen äußere Schmutzeinflüsse im Bezug auf die innen liegende Lagerschale erfüllen.

Obwohl der Aufbau der Kugelhülsengelenke relativ einfach ist, ergeben sich insbesondere durch die Anzahl der zu verbindenden Bauteile und die hieraus resultierende Anzahl der Fertigungsschritte insbesondere bei einem Serieneinsatz derartiger Kugelhülsengelenke nicht zu vernachlässigende Kosten.

Aufgabe der vorliegenden Erfindung ist es daher, ein Kugelhülsengelenk der eingangs geschilderten gattungsgemäßen Art so weiter zu entwickeln, dass durch eine Reduzierung der notwendigen Bauteilanzahl und eine Vereinfachung des Herstellvorganges insgesamt eine Bauteilkostenreduzierung herbeigeführt werden kann.

Diese Aufgabe wird erfindungsgemäß dadurch gelöst, dass das Gelenkgehäuse aus mindestens zwei Gehäuseteilen gebildet ist, wobei die Gehäuseteile jeweils korrespondierende elastische Zahnelemente aufweisen, die im Zusammenbauzustand des Gelenkgehäuses miteinander verrastet sind.

Der erfindungsgemäße Aufbau des Gelenkgehäuses vorzugsweise aus zwei Gehäusehälften vereinfacht den Zusammenbau des Kugelhülsengelenkes in wesentlicher Weise, da zum einen die bislang notwendigen Verschlussringe entfallen können und sich darüber hinaus die im Inneren des Gelenkgehäuses anzuordnende Kugelhülse wesentlich leichter und somit schneller und kostengünstiger in einer der vor dem Zusammenbau getrennten Gehäusehälften platzieren lässt und dann durch die an den Gehäusehälften angeordnete durch die Zahnelemente gebildete Rastverbindung ohne großen Kraftaufwand zusammengefügt werden kann.

Spezielle Ausgestaltungen des Gegenstandes der Erfindung ergeben sich in der Zusammenschau mit der technischen Lehre des Anspruches 1 zusätzlich aus den Merkmalen der Unteransprüche.

Es hat sich insbesondere als vorteilhaft erwiesen, die Gehäuseteile zur weiteren Reduzierung des Produktionspreises als symmetrisch aufgebaute Gehäusehälften zu gestalten, deren Symmetrieebene senkrecht zur Axiallängsachse des Gelenkgehäuses angeordnet ist. Die symmetrische Gestaltung führt dazu, dass für ein Kugelhülsengelenk zwei in gleicher Weise gestaltete Gehäusehälften verwendet werden können, was zum einen die Bauteilvielfalt reduziert und zum anderen zusätzliche Herstellkosten für die Anfertigung einer Form in dem Fall überflüssig macht, in dem die Gehäusehälften in vorteilhafter Weise aus elastischem Kunststoffmaterial, vorzugsweise einem Polymermaterial, angefertigt werden.

Es hat sich darüber hinaus als vorteilhaft erwiesen, die Zahnelemente zur Verrastung der Gehäusehälften als am Außenumfang der Gehäuseteile beabstandet zueinander angeordnete in Axiallängsrichtung des Kugelhülsengelenkes vorstehende Rastnasen und zwischen den Rastnasen angeordnete Rastausnehmungen auszubilden, wobei im Zusammenbauzustand des Gelenkgehäuses jeweils die Rastnase eines Gehäuseteiles mit einer Rastausnehmung eines anderen Gehäuseteiles in Wirkverbindung steht. Durch dies Gestaltung entsteht eine fingerartige Verzahnung der Gehäusehälften, wodurch eine Verdrehung der Gehäusehälften, die wiederum u. U. zu einer Relativbewegung zwischen Gehäuse und innen liegender Lagerschale führen würde, zuverlässig ausgeschlossen wird.

Darüber hinaus hat es sich als zweckmäßig herausgestellt, die Rastnasen an ihrer zur Mittellängsachse des Gelenkgehäuses weisenden Innenseite mit mehreren senkrecht zur Mittellängsachse verlaufenden parallel nebeneinander angeordneten zur besagten Mittellängsachse vorstehenden Rastnocken zu versehen, wobei sich zwischen den Rastnocken jeweils Vertiefungen befinden. Eine derartige Gestaltung findet sich zweckmäßigerweise bei den Rastausnehmungen an ihrer der Mittellängsachse des Gelenkgehäuses abgewandten Außenseite. Dort werden in Analogie der Gestaltung der Rastnasen mehrere senkrecht zur Mittellängsachse verlaufende, parallel nebeneinander angeordnete nach außen vorstehende Rastnocken und zwischen ihnen befindliche Vertiefungen eingebracht. Da jeweils eine Rastnase einer Gehäusehälfte mit einer korrespondierenden Rastausnehmung der anderen Gehäusehälfte zusammenwirkt, ermöglicht die Anordnung der Rastnocken und der entsprechenden Vertiefungen an den Rastnasen und Rastausnehmungen eine axiale Verklammerung der beiden Gehäusehälften beim Zusammenbau des Kugelhülsengelenkes, wobei sich die dauerhafte Verklammerung bzw. Verrastung mit einem äußerst geringen axial aufzubringenden Kraftaufwand realisieren lässt. Dieser Kraftaufwand ist infolge von Erfahrungswerten in einer Größenordnung von < 1 kN anzusiedeln. Gleichzeitig kann durch die Kunststoffmaterialwahl der Gehäuseteile eine gewisse axiale Vorspannung auf die innen liegende Kugelhülse und die in der Ausnehmung des Gelenkgehäuses angeordnete Lagerschale ausgeübt werden.

Eine vorteilhafte Gestaltung des Erfindungsgegenstandes sieht darüber hinaus vor, die Ausnehmung des Gelenkgehäuses zur Aufnahme der Lagerschale mit mehreren vorstehenden Nocken als Verdrehsicherung der eingesetzten Lagerschale zu versehen.

Darüber hinaus kann die Ausnehmung des Gelenkgehäuses an ihrer inneren, der aufzunehmenden Lagerschale zugewandten Oberfläche vorstehende Lagerpolster mit zwischen den Lagerpolstern befindlichen Vertiefungen aufweisen. Die zwischen den Lagerschalen angeordneten Vertiefungen führen durch das dort fehlende Kunststoffmaterial zu einer zusätzlichen Gewichtsreduzierung. Es bleibt hierbei festzuhalten, dass die Verwendung von Kunststoff als Materialwerkstoff für das erfindungsgemäße Gelenkgehäuse prinzipiell schon zu einer wesentlichen Gewichtsreduzierung führt. Darüber hinaus wird durch die Verwendung von Kunststoff sowohl die Kontaktkorrosion vermieden sowie überhaupt korrosionsanfällige Flächen am Gehäuse ausgeschlossen.

Im Folgenden wird ein Ausführungsbeispiel des Gegenstandes der Erfindung anhand der beigefügten Zeichnungen näher erläutert. Es zeigt:
- Figur 1: ein erfindungsgemäßes Kugelhülsengelenk in perspektivischer Gesamtdarstellung,
- Figur 2: eine Schnittdarstellung durch das Kugelhülsengelenk der Figur 1 und
- Figur 3: eine perspektivische Darstellung einer Gehäusehälfte des Ausführungsbeispieles aus Figur 1 und 2.

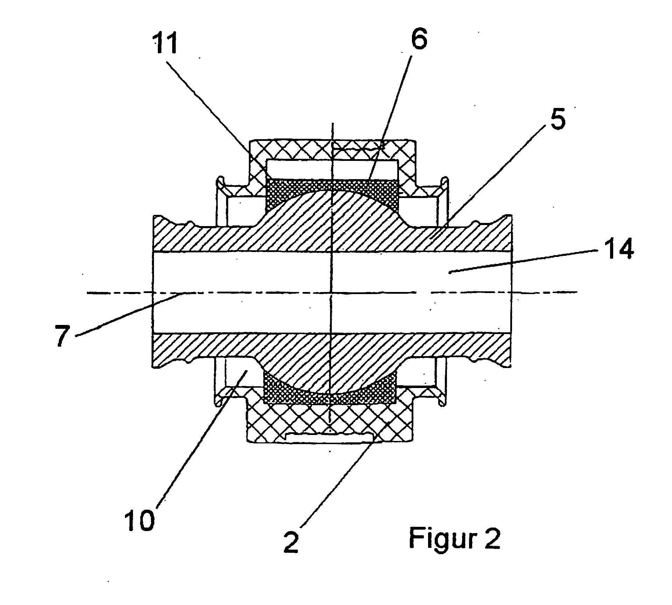

Das in seiner Gesamtheit mit 1 bezeichnete Kugelhülsengelenk besteht im Wesentlichen aus einem Gelenkgehäuse 2 und einer innerhalb des Gelenkgehäuses angeordneten Kugelhülse 5. Die Kugelhülse 5 ist üblicherweise aus Metall gefertigt und besitzt eine zentrale Durchgangsbohrung 14, wie dies aus der Figur 2 ersichtlich ist. An ihrer Außenfläche ist die Kugelhülse 5 mit einer Lagerfläche 6 versehen, die üblicherweise kugelförmig gestaltet ist. Die kugelförmige Lagerfläche 6 wird von einer Lagerschale 11 umschlossen, deren Innenbohrung der Form der Lagerfläche 6 korrespondierend angepasst ist. Die Lagerschale 11 selbst ist wiederum in einer zylindrischen Ausnehmung 10 des Gelenkgehäuses 2 festgelegt.

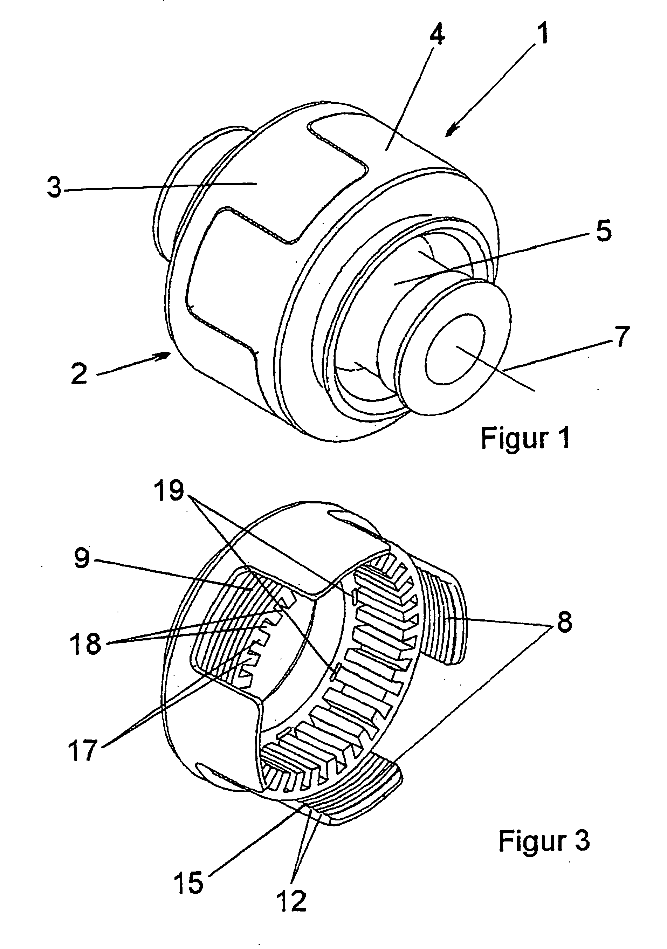

Wie dies insbesondere aus der Figur 1 deutlich wird, besteht das Gelenkgehäuse 2 im dargestellten Ausführungsbeispiel aus zwei Gehäusehälften 3, 4, die symmetrisch zu einer senkrecht zur Axiallängsachse 7 verlaufenden Ebene symmetrisch gestaltet sind. Durch die symmetrische Gestaltung der Gehäusehälften 3 und 4 sind für den Zusammenbau eines Kugelhülsengelenkes einheitliche Gehäusehälften verwendbar. Der Aufbau einer Gehäusehälfte 3 bzw. 4 ist im Einzelnen aus der Figur 3 ersichtlich.

Eine Gehäusehälfte 3 bzw. 4 weist korrespondierende elastische Zahnelemente auf, die bei einer Gehäusehälfte entweder als in Axialrichtung vorstehende Rastnasen oder als zwischen den Rastnasen 8 angeordnete Rastausnehmungen 9 ausgebildet sind. Beim Zusammenbau des Gelenkgehäuses werden Rastnasen 8 und Rastausnehmungen 9 der Gehäusehälften so zueinander platziert, dass sich jeweils eine Rastnase 8 und eine Rastausnehmung 9 gegenüber liegen. Die Gehäusehälften 3 und 4 können somit fingerartig ineinander geschoben werden und bilden dann eine geschlossene Gelenkgehäuseeinheit.

Aus der Figur 3 wird darüber hinaus deutlich, dass sowohl die Rastnasen 8 als auch die Rastausnehmungen 9 mit miteinander korrespondierenden Rastnocken 12 bzw. 13 versehen sind. Die Rastnocken 12 der Rastnasen 8 sind hierbei an der zur mittigen Axiallängsachse 7 des Gelenkgehäuses 2 weisenden Innenseite angeordnet, wobei jeweils eine Anzahl von Rastnocken 12 in Axialrichtung parallel nebeneinander angeordnet ist. Die Rastnocken 12 sind hierbei vorstehend gestaltet, während sich zwischen zwei benachbarten Rastnocken 12 jeweils eine geringfügig zurückstehende Vertiefung 15 befindet. Die Rastausnehmungen 9 sind analog den Rastnasen 8 gestaltet, hier befinden sich jedoch die Rastnocken an der der axialen Mittellängsachse 7 des Gelenkgehäuses 2 abgewandten Außenseite der Rastausnehmungen, wobei die Rastnocken jedoch ebenfalls parallel nebeneinander nach außen vorstehende angeordnet sind. Zwischen zwei benachbarten Rastnocken befindet sich jeweils eine geringfügige Vertiefung. Werden im Rahmen des Zusammenbaus des Kugelhülsengelenkes 1 die beiden Gehäusehälften 3, 4 nach dem Einsetzen der Kugelhülse 5 in axialer Richtung aufeinander zugeschoben, wobei die Gehäusehälften 3 bzw. 4 so auszurichten sind, dass sich jeweils eine Rastnase 8 und eine Rastausnehmung 9 gegenüber liege, so schnappt in dem Moment, in dem die jeweilige Rastnase tief genug in die Rastausnehmung 9 eingeführt worden ist, eine oder mehrere Rastnocken 12 in die korrespondierenden Vertiefungen 15 zwischen den Rastnocken ein, so dass eine in axialer Richtung fixierte feste Verbindung der Gehäusehälften 3 und 4 hergestellt ist. Durch die Verwendung von Kunststoffmaterial für die Gehäusehälften ergibt sich für die vorstehenden Rastnasen 8 eine relativ hohe Elastizität in radialer Richtung, so dass die Kräfte, die für das Zusammenfügen bzw. Verrasten der Gehäusehälften 3 und 4 notwendig sind, nur äußerst gering sind, trotzdem aber eine stabile Fixierung der Gehäusehälften erreicht wird.

Aus der Figur 3 ist darüber hinaus eine spezielle Gestaltung der die Lagerschale 11 aufnehmenden Ausnehmung 10 des Gelenkgehäuses 2 ersichtlich. Die zylindrische Ausnehmung 10 besitzt an ihrer der mittleren Längsachse 7 zugewandten Innenseite eine größere Anzahl vorstehender Lagerpolster 17, welche im zusammengebauten Zustand die Lagerschale 11 abstützen. Zwischen den Lagerpolstern 17 befinden sich Vertiefungen 18, die beispielsweise infolge des dort fehlenden Kunststoffmaterials zu einer zusätzlichen Gewichtsreduzierung der gesamten Gehäusehälfte beitragen. Innerhalb der Ausnehmung 10 sind darüber hinaus eine Anzahl von vorstehenden Nocken 19 eingebracht, die im zusammengebauten Zustand verhindern, dass sich die Lagerschale 11 gegenüber dem Gehäuse 2 verdrehen kann.

### Bezugszeichenliste

- 1: Kugelhülsengelenk
- 2: Gelenkgehäuse
- 3: Gehäusehälfte
- 4: Gehäusehälfte
- 5: Kugelhülse
- 6: Lagerfläche
- 7: Axiallängsachse
- 8: Rastnase
- 9: Rastausnehmungen
- 10: Ausnehmung
- 11: Lagerschale
- 12: Rastnocke
- 14: Durchgangsbohrung
- 15: Vertiefung
- 17: Lagerpolster
- 18: Vertiefung
- 19: Nocken

## Patentansprüche

1. Kugelhülsengelenk (1) mit einem Gelenkgehäuse (2), einer mit einer kugelförmig ausgebildeten Lagerfläche (6) versehenen Kugelhülse (5) und einer die Lagerfläche (6) umschließenden in einer Ausnehmung (10) des Gelenkgehäuses aufgenommenen Lagerschale (11),
**dadurch gekennzeichnet, dass**
das Gelenkgehäuse (1) aus mindestens zwei Gehäuseteilen gebildet ist, wobei die Gehäuseteile (3, 4) jeweils korrespondierende elastische Zahnelemente aufweisen, die im Zusammenbauzustand des Gelenkgehäuses miteinander verrastet sind.

2. Kugelhülsengelenk nach Anspruch 1,
**dadurch gekennzeichnet, dass**
die Gehäuseteile als symmetrisch aufgebaute Gehäusehälften (3, 4) gestaltet sind, deren Symmetrieebene senkrecht zur Axiallängsachse des Gelenkgehäuses (2) angeordnet ist.

3. Kugelhülsengelenk nach Anspruch 1 oder 2,
**dadurch gekennzeichnet, dass**
die Zahnelemente als am Außenumfang der Gehäuseteile (3, 4) beabstandet zueinander angeordnete in Axiallängsrichtung (7) des Kugelhülsengelenkes (1) vorstehende Rastnasen (8) und zwischen den Rastnasen (8) angeordnete Rastausnehmungen (9) ausgebildet sind, wobei im Zusammenbauzustand des Gelenkgehäuses (2) jeweils die Rastnase (8) eines Gehäuseteiles (4) mit einer Rastausnehmung (9) eines anderen Gehäuseteiles (4) in Wirkverbindung steht.

4. Kugelhülsengelenk nach Anspruch 3,
**dadurch gekennzeichnet, dass**
die Rastnasen (8) an ihrer zur Mittellängsachse (7) des Gelenkgehäuses (2) weisenden Innenseite mehrere senkrecht zur Mittellängsachse (7) verlaufende, parallel nebeneinander angeordnete, zur Mittellängsachse (7) vorstehende Rastnocken (12) und zwischen ihnen befindliche Vertiefungen (15) aufweisen.

5. Kugelhülsengelenk nach Anspruch 3 oder 4,
**dadurch gekennzeichnet, dass**
die Rastausnehmungen (9) an ihrer der Mittellängsachse (7) des Gelenkgehäuses (2) abgewandten Außenseite mehrere senkrecht zur Mittellängsachse (7) verlaufende, parallel nebeneinander angeordnete, nach außen vorstehende Rastnocken und zwischen ihnen befindliche Vertiefungen aufweist.

6. Kugelhülsengelenk nach einem der Ansprüche 1 bis 5,
**dadurch gekennzeichnet, dass**
die Gehäuseteile (3, 4) aus elastischen Kunststoffmaterial, vorzugsweise einem Polymermaterial hergestellt sind.

7. Kugelhülsengelenk nach einem der Ansprüche 1 bis 6,
**dadurch gekennzeichnet, dass**
die Ausnehmung (10) des Gelenkgehäuses (2) zur Aufnahme der Lagerschale (11) mehrere vorstehende Nocken (19) als Verdrehsicherung der eingesetzten Lagerschale (11) aufweisen.

8. Kugelhülsengelenk nach einem der Ansprüche 1 bis 7,
**dadurch gekennzeichnet, dass**
die Ausnehmung (10) des Gelenkgehäuses (2) zur Aufnahme der Lagerschale (11) an ihrer inneren Oberfläche vorstehende Lagerpolster (17) mit zwischen den Lagerpolstern (17) befindlichen Vertiefungen (18) aufweist.

## Claims

1. Ball sleeve joint (1) comprising a joint housing (2), a ball sleeve (5) provided with a spherically designed bearing surface (6), and a bearing shell (11) surrounding the bearing surface (6) and accommodated in a recess (10) of the joint housing,
**characterized in that**
the joint housing (1) is formed from at least two housing parts, wherein the housing parts (3, 4) in each case have corresponding elastic tooth elements, which in the assembled state of the joint housing are latched with one another.

2. Ball sleeve joint according to claim 1,
**characterized in that**
the housing parts are fashioned as symmetrically designed housing halves (3, 4), the plane of symmetry of which is disposed at right angles to the axial longitudinal axis of the joint housing (2).

3. Ball sleeve joint according to claim 1 or 2,
**characterized in that**
the tooth elements are designed as detent lugs (8), which are disposed with mutual spacing on the outer periphery of the housing parts (3, 4) and project in axial longitudinal direction (7) of the ball sleeve joint (1), and detent recesses (9) disposed between the detent lugs (8), wherein in the assembled state of the joint housing (2) in each case the detent lug (8) of one housing part (4) is workingly connected to a detent recess (9) of another housing part (4).

4. Ball sleeve joint according to claim 3,
**characterized in that**
the detent lugs (8) at their inner side facing the central longitudinal axis (7) of the joint housing (2) have a plurality of detent cams, which extend at right angles to the central longitudinal axis (7) and are disposed parallel alongside one another and project towards the central longitudinal axis (7), and indentations (15) situated between the detent cams.

5. Ball sleeve joint according to claim 3 or 4,
**characterized in that**
the detent recesses (9) at their outer side remote from the central longitudinal axis (7) of the joint housing (2) have a plurality of outwardly projecting detent cams, which extend at right angles to the central longitudinal axis (7) and are disposed parallel alongside one another, and indentations situated between the detent cams.

6. Ball sleeve joint according to one of claims 1 to 5,
**characterized in that**
the housing parts (3, 4) are manufactured from elastic plastics material, preferably from a polymer material.

7. Ball sleeve joint according to one of claims 1 to 6,
**characterized in that**
the recess (10) of the joint housing (2) for receiving the bearing shell (11) has a plurality of projecting cams (19) as a means of locking the inserted bearing shell (11) against rotation.

8. Ball sleeve joint according to one of claims 1 to 7,
**characterized in that**
the recess (10) of the joint housing (2) for receiving the bearing shell (11) has at its inner surface projecting bearing pads (17) with indentations (18) situated between the bearing pads (17).

## Revendications

1. Articulation à douille sphérique (1) avec un boîtier d'articulation (2), une douille sphérique (5) pourvue d'une surface d'appui (6) réalisée en forme sphérique et un coussinet (11) enfermant la surface d'appui (6) et reçu dans un évidement (10) du boîtier d'articulation,
**caractérisée en ce que**
le boîtier d'articulation (1) est formé d'au moins deux parties, les parties (3, 4) du boîtier comportant chacune des éléments dentés élastiques correspondants qui, à l'état assemblé du boîtier de l'articulation, s'encliquètent entre eux.

2. Articulation à douille sphérique selon la revendication 1,
**caractérisée en ce que**
les parties du boîtier sont réalisées comme moitiés de boîtier (3, 4) de construction symétrique, dont le plan de symétrie est disposé parallèlement à l'axe longitudinal axial du boîtier (2) de l'articulation.

3. Articulation à douille sphérique selon la revendication 1 ou 2,
**caractérisée en ce que**
les éléments dentés sont réalisés comme ergots d'encliquetage (8) disposés espacés les uns des autres sur le pourtour extérieur des parties (3, 4) du boîtier et dépassant dans la direction longitudinale axiale (7) de l'articulation à douille sphérique (1), et comme évidements d'encliquetage (9) disposés entre les ergots d'encliquetage (8), à l'état assemblé du boîtier (2) de l'articulation l'ergot d'encliquetage (8) d'une partie (4) du boîtier étant en liaison active avec un évidement d'encliquetage (9) d'une autre partie (4) du boîtier.

4. Articulation à douille sphérique selon la revendication 3,
**caractérisée en ce que**
les ergots d'encliquetage (8) comportent, sur leur côté intérieur dirigé vers l'axe médian longitudinal (7) du boîtier (2) de l'articulation, plusieurs cames d'encliquetage (12) s'étendant perpendiculairement à l'axe médian longitudinal (7), disposées côté à côte parallèlement et faisant saillie vers l'axe médian longitudinal (7), ainsi que des renfoncements (15) se trouvant entre elles.

5. Articulation à douille sphérique selon la revendication 3 ou 4,
**caractérisée en ce que**
les évidements d'encliquetage (9) comportent, sur leur côté extérieur tourné à l'opposé de l'axe médian longitudinal (7) du boîtier (2) de l'articulation, plusieurs cames d'encliquetage s'étendant perpendiculairement à l'axe médian longitudinal (7), disposées côte à côte parallèlement, et faisant saillie vers l'extérieur, ainsi que des renfoncements se trouvant entre elles.

6. Articulation à douille sphérique selon l'une des revendications 1 à 5,
**caractérisée en ce que**
les parties (3, 4) du boîtier sont fabriquées dans une matière plastique élastique, de préférence une matière polymère.

7. Articulation à douille sphérique selon l'une des revendications 1 à 6,
**caractérisée en ce que**
l'évidement (10) du boîtier (2) de l'articulation, destiné à recevoir le coussinet (11), comporte plusieurs cames (19) saillantes servant de blocage en rotation au coussinet (11) inséré.

8. Articulation à douille sphérique selon l'une des revendications 1 à 7,
**caractérisée en ce que**
l'évidement (10) du boîtier (2) de l'articulation, destiné à recevoir le coussinet (11), comporte des coussins d'appui (17), faisant saillie sur sa surface intérieure, avec des renfoncements (18) se trouvant entre les coussins d'appui (17).
